# EUROPEAN PATENT APPLICATION

(11) **EP 4 629 452 A1**
(43) Date of publication of application: **08.10.2025**
(21) Application number: 24218004.0
(22) Date of filing: 06.12.2024
(51) Int. Cl.: H01R 43/26, B25J 11/00, B60R 16/00

(54) **CONNECTOR ASSEMBLY**

(30) Priority: 24.01.2024 US 202463624566 P; 02.12.2024 US 202418965330
(71) Applicant: Aptiv Technologies AG, 8200 Schaffhausen (CH)
(72) Inventor: CAMPBELL, Jeffrey S., 8200 Schaffhausen (CH); WEBER Jr., Wesley Ward, 8200 Schaffhausen (CH)
(74) Representative: Bardehle Pagenberg Partnerschaft mbB Patentanwälte Rechtsanwälte

(57) **Abstract**

This disclosure presents a connector assembly (100, 600, 1000) featuring a first slot (204, 606, 1006) on a first outer surface and a corresponding first slot (204, 606, 1006) on a second outer surface, both extending parallel to a first axis (Y). Additionally, a second slot (206, 608, 1008) on the first outer surface and a corresponding second slot (206, 608, 1008) on the second outer surface, extending parallel to a second axis (X) askew to the first axis (Y), are provided. These slots (204, 606, 1006, 206, 608, 1008) are designed to receive ridges (302, 304) on gripping arms (202) of a robotic manipulator (200), thereby ensuring precise alignment and positioning of the connector assembly (100, 600, 1000).

## Description

This disclosure is directed to a robotic manipulator assignment system and components having gripping and parking devices for robotic assembly, e.g., robotic assembly of electrical connections.

Automobile manufacturers are adopting robotic installation and assembly of electrical wiring harnesses in vehicles. Existing electrical connectors cannot be accurately gripped and manipulated by robotic manipulators. Additionally, existing electrical harness assemblies have electrical connectors positioned in locations which may be difficult to access with vehicle assembly robots. Further, existing mate-assist electrical connectors used for vehicle service are not optimized for vehicle assembly robot manipulator grasping and connector mating.

It is typically not practical to use a robot to attempt to perform the same manual handling operations as a human assembly operator. Existing wiring harness assemblies and electrical connectors lack gripping and location features that are desired for conventional robots to achieve fast cycle time with high quality results. Currently, vehicle original equipment manufacturers (OEMs) almost entirely use manual operations in handling wiring harnesses and plugging connectors.

It is difficult for robots to accurately grip traditional automotive electrical connectors. Traditional automotive wiring harness assemblies have connectors that are positioned in random locations, making it difficult for vehicle assembly robots to access them. Traditional mate-assist connectors required for servicing the wiring harnesses are also not optimized for vehicle assembly robot manipulator grasping and connector mating.

Previous approaches to connector assemblies for robotic manipulators have typically involved utilizing fixed alignment features such as pins or grooves to ensure proper alignment and positioning of the connector assembly relative to the robotic manipulator. These alignment features are designed to engage corresponding features on the robotic manipulator, providing a secure and stable connection between the two components. However, these fixed alignment features may limit the flexibility and adaptability of the connector assembly to different types of robotic manipulators.

In some existing connector assemblies, alignment and positioning are achieved through the use of mechanical fasteners or clamps that secure the connector assembly to the robotic manipulator. While effective in providing a stable connection, these mechanical fasteners may add complexity to the assembly process and increase the overall size and weight of the connector assembly. Additionally, the use of mechanical fasteners may require additional tools or equipment for installation and removal, which can be cumbersome and time-consuming in certain applications.

Another approach in the prior art involves the use of magnetic alignment systems in connector assemblies to facilitate the connection between the connector assembly and the robotic manipulator. These magnetic alignment systems utilize magnets embedded within the connector assembly and corresponding magnetic elements on the robotic manipulator to guide and secure the connection. While magnetic alignment systems offer advantages in terms of ease of use and quick connection, they may lack the precision and rigidity provided by physical engagement features such as ridges and slots. Furthermore, magnetic alignment systems may be susceptible to interference from external magnetic fields, potentially affecting the reliability and stability of the connection.

However, none of these approaches have provided a comprehensive solution that combines the features described in this disclosure.

In some aspects, the techniques described herein relate to a connector assembly, including: a first slot defined in a first outer surface of the connector assembly and another first slot defined in a second outer surface of the connector assembly, the first slots extending parallel to a first axis of the connector assembly, the second outer surface being distinct from and arranged opposite to the first outer surface; and a second slot defined in the first outer surface and another second slot defined in the second outer surface, the second slots extending parallel to a second axis of the connector assembly, the second axis being arranged askew to the first axis, each of the first and second slots being configured to receive one of a plurality of corresponding ridges protruding from a robotic manipulator to positively align and position the connector assembly relative to the robotic manipulator.

In some aspects, the techniques described herein relate to a robotic manipulator, including: a pair of gripping arms, each arm including: a first ridge defined on an inner surface extending parallel to a first axis of the pair of gripping arms; and a second ridge defined on the inner surface extending parallel to a second axis of the pair of gripping arms, the second axis being arranged askew to the first axis.

In some aspects, the techniques described herein relate to a device configured to secure a connector to a substrate, the connector having a pair of parallel grooves having slots within walls thereof, the device including: a pair of cantilevered rails extending sustainably parallel to one another and configured to be received within the pair of parallel grooves; and latches disposed proximate free ends of the rails and configured to releasably engage the slots.

Embodiments of the present invention will now be described by way of example with reference to the accompanying drawings, in which:
**FIG. 1A** shows an isometric top view of a connector and a parking device configured for use with an **assembly** robot according to some embodiments.
**FIG. 1B** shows an isometric bottom view of the connector and parking device of **FIG. 1A** according to some embodiments.
**FIG. 2** shows an isometric view of the assembly robot and the connector of **FIG. 1A** disposed within the parking device of **FIG. 1A** according to some embodiments.
**FIG. 3** shows an isometric view of a gripping arm of the assembly robot of **FIG. 2** according to some embodiments.
**FIG. 4** shows an isometric view of the assembly robot gripping the connector of **FIG. 1A** and removing it from the parking device of **FIG. 1A** according to some embodiments.
**FIG. 5A** shows an isometric view of the assembly robot of **FIG 3** positioning the connector of **FIG. 1A** for connection with a mating connector according to some embodiments.
**FIG. 5B** shows an isometric view of the assembly robot of **FIG 3** inserting and mating the connector of **FIG. 1A** with the mating connector of **FIG. 5A** according to some embodiments.
**FIG. 6A** shows an isometric view of another connector configured for use with an assembly robot according to some embodiments.
**FIG. 6B** shows an exploded view of the connector of **FIG. 6A** according to some embodiments.
**FIG. 7** shows an isometric view of the connector of **FIG. 6A****,** and a parking device configured for use with the assembly robot according to some embodiments.
**FIG. 8** shows an isometric view of the assembly robot gripping the assembled connector and gripping device of **FIG. 6B** according to some embodiments.
**FIG. 9** shows an isometric view of the assembly robot gripping the assembled connector and gripping device of **FIG. 6B** and removing them from the parking device of **FIG. 7** according to some embodiments.
**FIG. 10A** shows an isometric view of yet another connector configured for use with an assembly robot according to some embodiments.
**FIG. 10B** shows an exploded view of the connector of **FIG. 10A** according to some embodiments.
**FIG. 11** shows an isometric view of a wiring harness channel according to some embodiments.

This disclosure describes a system for accurately "parking" electrical connectors of a wiring harness in a predetermined location and orientation so that they may be picked up by robotic manipulators and connected with corresponding mating electrical connector. This disclosure also describes parking devices used to attach the electrical connections to a substrate, such as a wiring harness channel, a platter holding several electrical connectors, or the wiring harness itself. These parking devices are simple to tool and have a low profile design in order to reduce packaging space needed for the parking devices. This disclosure further describes an end effector design for a robotic manipulator that may be used with multiple electrical connector types on one or more harnesses. The parking device may include locking features that positively secure an electrical connector in its predetermined location and orientation. The connector may then be released from its predetermined location by the gripping action of the end effectors. This disclosure also presents a clip-on parking device adaptor that allows integrating the an end effector design with preexisting connector designs.

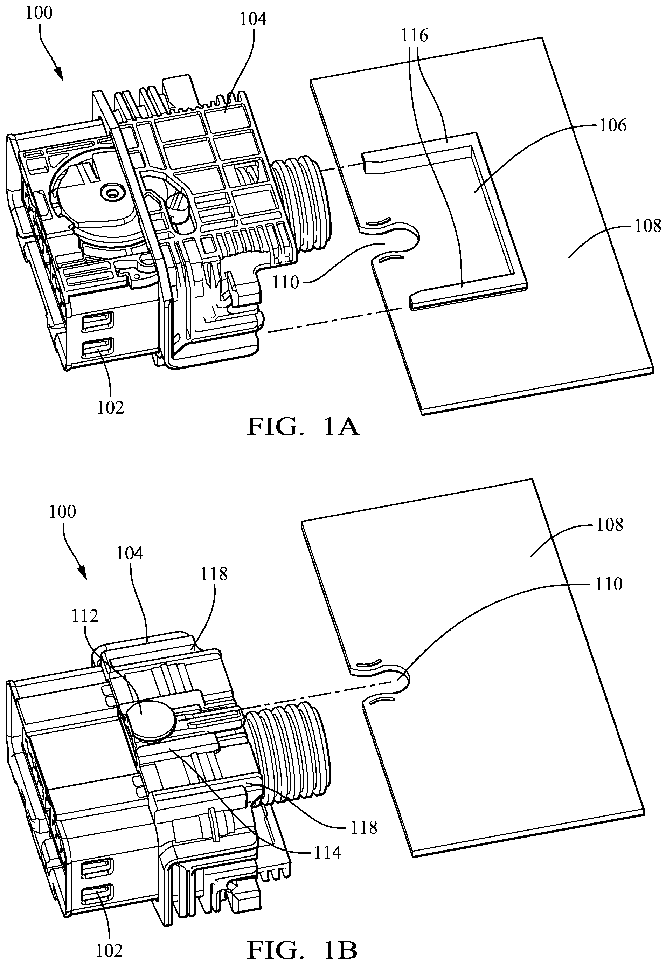

**FIGs. 1A and 1B** show a first non-limiting example of an electrical connector 100 having a connector body 102 and a sliding mating mechanism 104 attached thereto. The connector 100 is configured to interface with a parking device 106 to maintain the connector 100 in a known location and preferably with a known alignment, so that it may be easily located and retrieved by a robotic manipulator. The parking device 106 may be defined by or secured to a substrate 108, e.g., a wiring harness channel, a platter holding several electrical connectors, or the wiring harness itself (not shown) containing the connector 100. As shown in **FIGs. 1A and 1B****,** the parking device 106 comprises a U-shaped niche 110. As shown in **FIG. 1B****,** the connector 100 includes a retention feature in the form of a post 112 on the bottom of the connector 100 that is received in the U-shaped niche 110. The U-shaped niche 110 defines a narrowed portion having a width that is less than the diameter of the semicircular portion of the slot, thereby forming a detent configured to retain the post 112 within the U-shaped niche 110. The parking device 106 also comprises L-shaped rails 116 as shown in **FIG. 1A****.** The post 112 may be attached to the sliding mating mechanism 104 by a mounting clip 114, such as a mounting clip compliant with USCAR Specification EWCAP-005 Rev. G.

As further shown in **FIG. 1B****,** the connector 100 includes an alignment feature in the form of grooves 118 in the bottom of the sliding mating mechanism 104. These grooves 118 receive the L-shaped rails 116 and are configured to align and position the connector 100 on the parking device 106 in cooperation with the L-shaped rails 116.

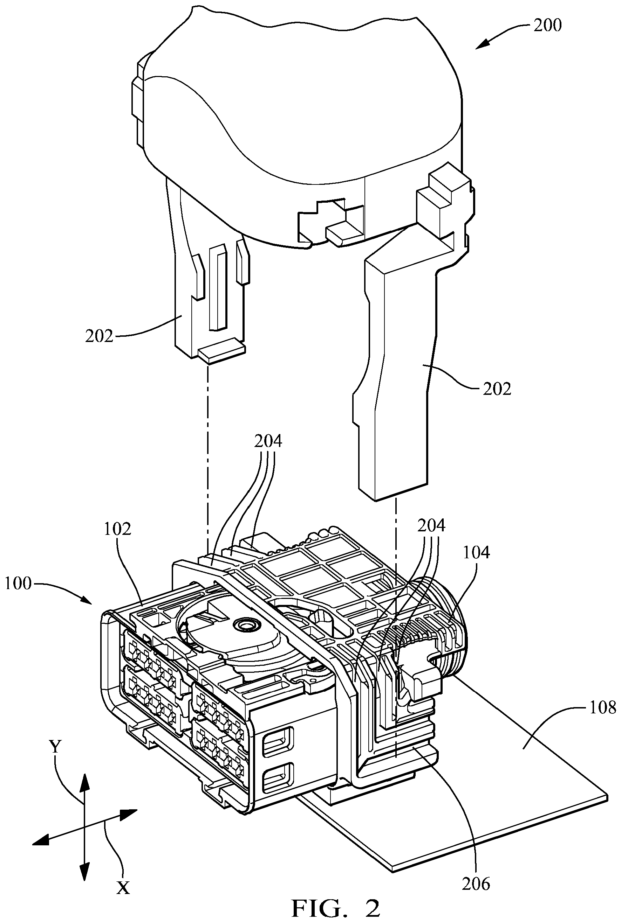

The connector 100 may be "parked" in the parking device 106 as shown in **FIG. 2** when the wiring harness is shipped from the wiring harness assembly plant to the vehicle assembly plant. This provides the connector 100 in a predesignated location and orientation for the robotic manipulator 200 to find the connector 100 as the wiring harness is installed in the vehicle by the robotic manipulator. As further shown in **FIG. 2****,** the robotic manipulator 200 may be used to grasp the connector 100 to remove the connector 100 from the parking device 106. In other applications, the robotic manipulator 200 may be used to place the connector 100 in the parking device 106. The robotic manipulator 200 includes a pair of gripping arms 202.

**FIG. 2** also shows a plurality of first slots 204 that are defined on two opposing sides of the connector 100, in this example on the sides of the sliding mating mechanism 104. The plurality of first slots 204 are arranged parallel a first axis of the connector 100, in this example a vertical axis Y. A second pair of slots 206 are defined on the opposing sides of the sliding mating mechanism 104 and are arranged parallel a second axis of the connector 100, in this example a horizontal axis X that is parallel to a mating axis of the connector 100.

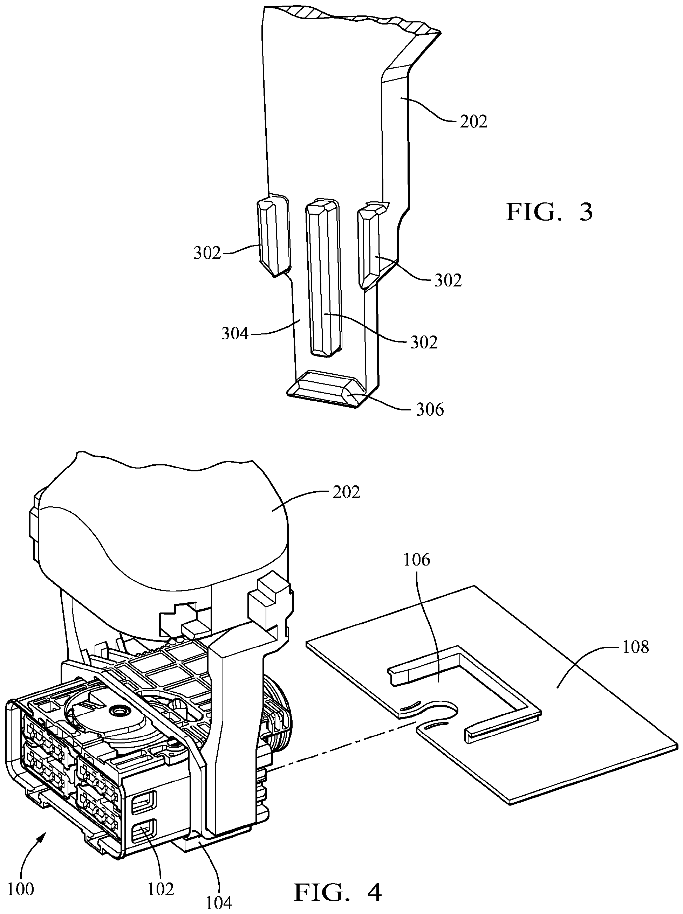

As best shown in **FIG. 3****,** each gripping arm 202 includes a plurality of elongated first ridges 302 which protrude from an inner surface 304 and linearly extends parallel to a first axis A of the pair of gripping arms 202. Each gripping arm 202 also includes an elongated second ridge 306 which projects from the inner surface 304 and extends parallel to a second axis B of the pair of gripping arms. The second axis B is arranged nonparallel or askew to the first axis A, preferably substantially perpendicularly to the first axis A. As used herein "substantially perpendicularly" means that one of the axes is arranged ± 90° to the other axis.

The first ridges 302 are configured to be received within corresponding first slots 204 in the sliding mating mechanism 104, the second ridges 306 are configured to be received within the corresponding second slots 206. The slots 204, 206 are configured to cooperate with the corresponding ridges 302, 306 to positively align and position the connector 100 relative to the robotic manipulator 200 as shown in **FIG. 4****.**

In alternative embodiments, the gripping arms of the robotic manipulator 200 may define slots rather than ridges. The slots would be configured to receive corresponding ridges in the sliding mating mechanism 104 which are aligned similarly to the slots 204, 206 to positively align and position the connector 100 relative to the robotic manipulator 200.

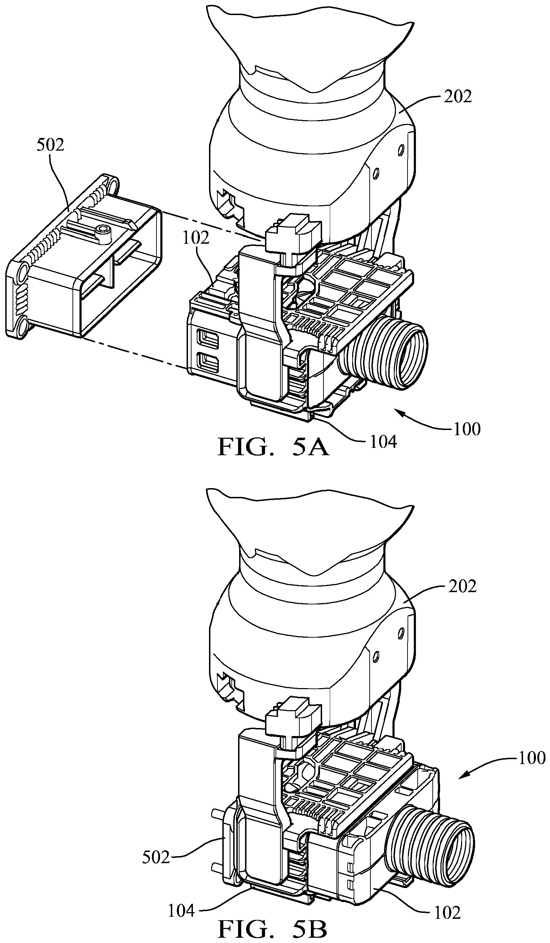

**FIGS. 2** and **4****-5B** show a process of coupling the connector 100 to a corresponding mating connector using the robotic manipulator 200, In **FIG. 2****,** the robotic manipulator 200 is positioned over the predetermined location of the connector 100 and arranged according to the predetermined alignment of the to grasp the connector 100. The robotic manipulator 200 then places the ridges 302, 306 of the gripping arms 202 in the slots 204, 206 of the sliding mating mechanism 104 and applies a force to the connector 100 to release the connector 100 from post 112 from the niche 110 of the parking device 106 in a direction substantially parallel to the X axis as shown in **FIG. 4****.** As shown in **FIG 5A** the robotic manipulator 200 moves the connector 100 to align it with the corresponding mating connector 502 and plugs the connector 100 into the mating connector 502 as shown in **FIG. 5B****.** The robotic manipulator 200 may also move the sliding mating mechanism 104 from a pre-staged position shown in **FIG 5A** to a fully staged position shown in **FIG. 5B****,** thereby securing the connector 100 to the mating connector 502.

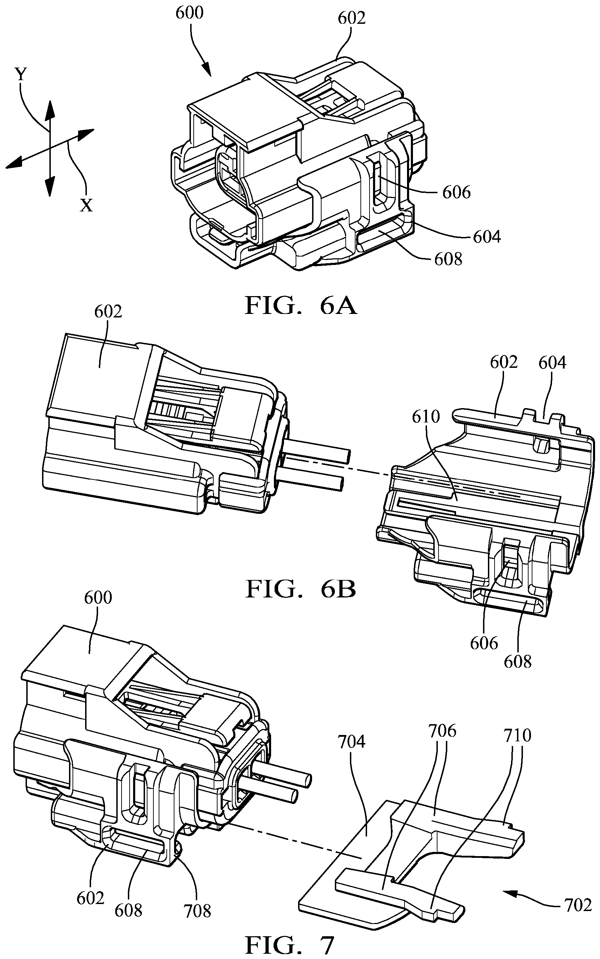

**FIGs. 6A** and **6B** shows another example of a connector 600, e.g., an electrical connector having a connector body 602. The connector 600 further includes a connector sleeve 604, preferably formed of an electrically insulative material such as a dielectric polymer, with first slots 606 that are defined on two opposing sides of the connector sleeve 604. The first slots 606 are arranged parallel a first axis of the connector sleeve 604, in this example a vertical axis Y. Second slots 608 are defined on the opposing sides of the connector sleeve 604 and are arranged parallel a second axis of the connector sleeve 604, in this example a horizontal axis X that is parallel to a mating axis of the connector 600. Due to the smaller size of the connector 600 versus the connector 100 shown above, it is possible that only one first slot may be needed to securely grip the connector 600 with the gripping arms 202 of the robotic manipulator 200 discussed above. Additionally, due to the smaller size of the connector 600, it is possible that only one first slot may be needed may be accommodated in the connector sleeve 604. In alternative embodiments, the connector sleeve may include only a first slot arranged parallel to the first axis or a second slot arranged parallel to the second axis due to size constraints. However, these alternative embodiments do not possess the advantages of positively locating the connector sleeve relative to two nonparallel axes provided by the first and second slots 606, 608 of the connector sleeve 604.

The connector sleeve 604 may be used to adapt existing connector body designs to interface with the gripping arms 202 of the robotic manipulator 200 without the need to redesign and recertify the connector body 602. The connector sleeve 604 may be attached to the connector body 602 by a feature 610 on the connector sleeve 604 configured to interface with an existing mounting clip on the connector body, e.g. a mounting clip compliant with USCAR Specification EWCAP-005 Rev. G. In other embodiments, the slots 606, 608 may be incorporated into a mat seal cover (not shown) attached to the connector body 602 or may be integrated into a wire dress cover (not shown) attached to the connector body 602. In yet other embodiments, the slots 606, 608 may be formed in the connector housing.

The connector sleeve 604 may be configured to interface with a parking device 702 shown in **FIG. 7** that is configured to maintain the connector 600 in a known location, and preferably a known orientation. The parking device 702 may be defined by or secured to a substrate 704, e.g., a wiring harness channel, a platter holding several electrical connectors, or the wiring harness itself (not shown) containing the connector 600. The parking device 702 includes a pair of parallel cantilevered arms 706 that are configured to be received in corresponding channels 708 in the bottom of the connector sleeve 604. The second slots 608 extend all the way from the outer surfaces of the connector sleeve 604 to the channels 708. The arms 706 have retaining latch features 710 that are configured engage edges formed by an intersection of the second slots 608 and the channels 708. The engagement of these latch features 710 with these edges retain the connector sleeve 604 to the parking device 702 until the robotic manipulator 200 removes it from the parking device 702. The arms 706 are further configured to align and position the connector 600 on the parking device 702.

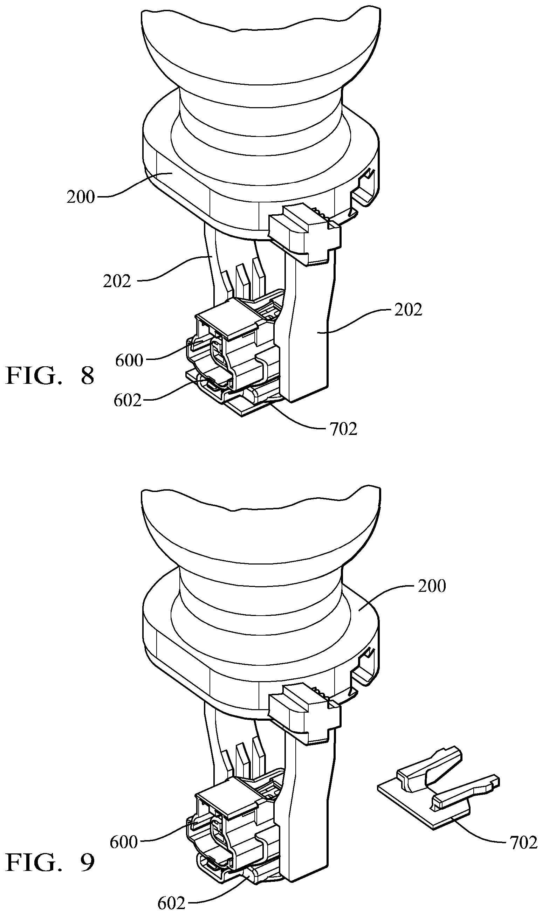

As shown in **FIG. 8****,** the robotic manipulator 200 places the first and second ridges 302, 306 of the gripping arms 202 in the first and second slots 606, 608 of the connector sleeve. The second ridges 306 of the gripping arms 202 then extend all the way through the second slots 608 and contact the retaining latch features 710, thereby bending the arms 706 slightly inward and disengaging the retaining latch features 710 allowing the robotic manipulator 200 to remove the connector 600 from the parking device 702 in a direction substantially parallel to the X axis as shown in **FIG. 9****.**

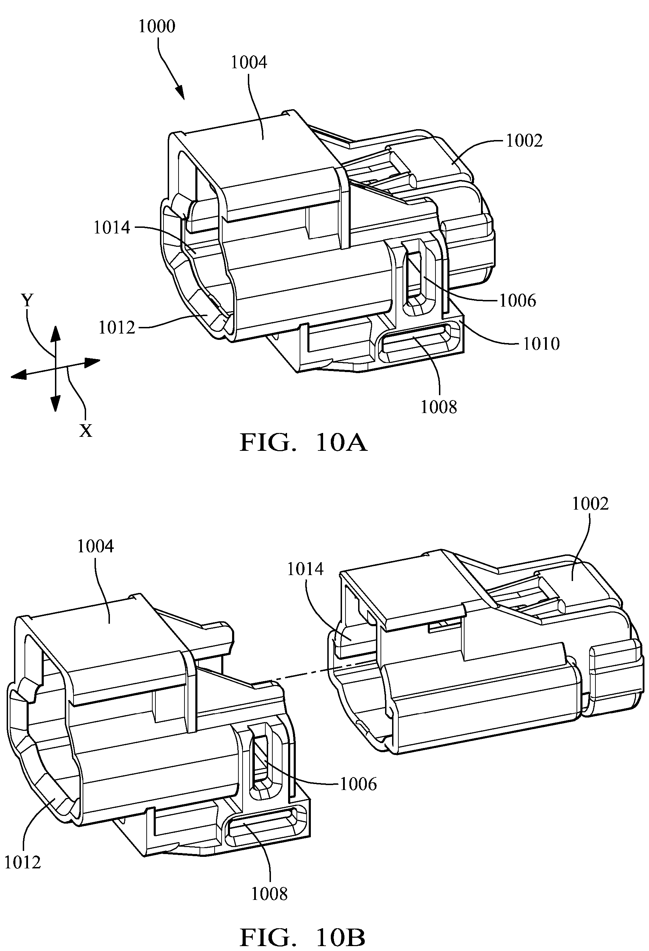

**FIGs. 10A and 10B** shows yet another example of a connector 1000, e.g., an electrical connector having a connector body 1002. Like the connector 600 discussed above, the connector 1000 also includes a connector sleeve 1004, preferably formed of an electrically insulative material such as a dielectric polymer, defining first slots 1006 on two opposed sides of the connector sleeve 1004. The first slots 1006 are arranged parallel a first axis of the connector sleeve 1004, in this example a vertical axis Y. Second slots 1008 are defined on the opposing sides of the connector sleeve 1004 and are arranged parallel a second axis of the connector sleeve 604, in this example a horizontal axis X that is parallel to a mating axis of the connector 600. In alternative embodiments, the connector sleeve may include only a first slot arranged parallel to the first axis or a second slot arranged parallel to the second axis due to size constraints. However, these alternative embodiments do not possess the advantages of positively locating the connector sleeve relative to two nonparallel axes provided by the first and second slots 1006, 1008 of the connector sleeve 1004.

The connector sleeve 1004 may also be used to adapt existing connector body designs to interface with the gripping arms 202 of the robotic manipulator 200 without the need to redesign and recertify the connector body 1002. In contrast to the connector 600 the connector body 1002 is not secured the connector sleeve 1004 by a mounting clip, but instead is secured by other means, such as a friction fit between the connector body 1002 and the connector sleeve 1004.

The connector sleeve 1004 may be configured to interface with the parking device 702 shown in **FIG. 7** in the same way as connector sleeve 604 described above. The connector sleeve 1004 includes a pair of channels 1010 in the bottom of the connector sleeve 1004 configured to receive the cantilevered arms 706. The connector sleeve 604, the second slots 1008 also extend all the way from the outer surfaces of the connector sleeve 1004 to the channels 1010, thereby allowing the second ridges 306 of the gripping arms 202 to release the retaining latch features 710 from engagement with the edges of the second slots 1008.

The connector sleeve also includes a tapered potion 1012 surrounding a mating opening 1014 of the connector body 1002. This tapered potion 1012 is configured to guide the corresponding mating connector (not shown) into the mating opening 1014 as the robotic manipulator 200 couples the connector 1000 with the corresponding mating connector.

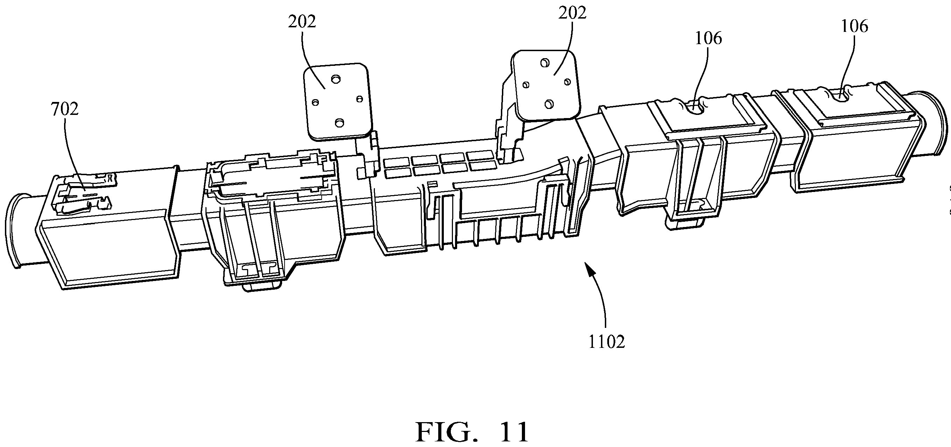

As shown in **FIG. 11****,** the parking devices 106 or 702 may be integrated into a harness channel 1102, stiffener, or any other component that is part of the wiring harness. In this illustrated example, the harness channel 1102 may be configured to itself be picked up and manipulated by the gripping arms 202 of the robotic manipulator 200.

As can be seen by comparing the plurality of first slots 206 of connector 100 with the first slots 606 of connector 600 or the first slots 1006 of connector 1000, the variation in length of the first ridges 302 of the gripping arms 202 of the robotic manipulator 200 shown in **FIG. 3** provide the benefits of being able to use a common gripper arm design to pick up and manipulate both larger connector 100 and smaller connector 600, as well as other similar connector designs.

In alternative embodiments, the first and second slots may be aligned in other orientations, e.g., the first and second slots may be arranged so that their axes are nonparallel or askew, but not necessarily perpendicular to one another. Additionally, the first axis of the first slot may be arranged parallel to the mating axis of the connector instead of the second axis of the second slot being arranged parallel to the mating axis of the connector as shown in the illustrated examples.

While the examples presented herein are directed to an electrical connector, alternative embodiments may be envisioned that are directed to fiber optic connectors, pneumatic connectors, hydraulic connectors, or a hybrid connector containing a combination of any of these types of conductors.

### Discussion of Possible Embodiments

The following are non-exclusive descriptions of possible embodiments of the present invention.

In some aspects, the techniques described herein relate to a connector assembly, including: a first slot defined in a first outer surface of the connector assembly and another first slot defined in a second outer surface of the connector assembly, the first slots extending parallel to a first axis of the connector assembly, the second outer surface being distinct from and arranged opposite to the first outer surface; and a second slot defined in the first outer surface and another second slot defined in the second outer surface, the second slots extending parallel to a second axis of the connector assembly, the second axis being arranged askew to the first axis, each of the first and second slots being configured to receive one of a plurality of corresponding ridges protruding from a robotic manipulator to positively align and position the connector assembly relative to the robotic manipulator.

The connector assembly of the preceding paragraph can optionally include, additionally and/or alternatively any, one or more of the following features/steps, configurations and/or additional components.

In some aspects, the techniques described herein relate to a connector assembly, further including a plurality of slots defined in the first outer surface and the second outer surface, wherein the first slot is included as one of the plurality of slots and wherein at least one of the plurality of slots is shorter than other slots in the plurality of slots.

In some aspects, the techniques described herein relate to a connector assembly, wherein the first axis is substantially perpendicular to the second axis.

In some aspects, the techniques described herein relate to a connector assembly, further including a location feature disposed on a third outer surface of the connector assembly different from the first and second outer surfaces, the location feature configured to secure the connector assembly in a predetermined location and alignment on a substrate.

In some aspects, the techniques described herein relate to a connector assembly, wherein the location feature includes an alignment feature configured to maintain the connector assembly in the predetermined alignment on the substrate and a retention feature configured to secure the connector assembly in the predetermined location on the substrate.

In some aspects, the techniques described herein relate to a connector assembly, wherein the alignment feature comprises a pair of parallel grooves extending parallel to the second axis, the pair of parallel grooves are configured to receive a pair of parallel rails disposed on the substrate.

In some aspects, the techniques described herein relate to a connector assembly, further including the substrate, wherein the retention feature includes the second slots which extend from the first or second outer surfaces to the pair of parallel grooves and wherein the pair of parallel rails are resilient cantilevered beams having a latch proximate a free end and wherein the latch is received within the second slot.

In some aspects, the techniques described herein relate to a connector assembly, further including the substrate, wherein the retention feature includes a post protruding from the third outer surface received in a niche in the substrate and wherein the substrate includes detent features extending into the niche and releasably retaining the post in the niche.

In some aspects, the techniques described herein relate to a connector assembly, wherein the retention feature is attached to the connector assembly by a mounting clip which is compliant with USCAR Specification EWCAP-005 Rev. G.

In some aspects, the techniques described herein relate to a connector assembly, further including a connector body and a separate connector sleeve in which the connector body is disposed, wherein the connector sleeve defines the first and second slots.

In some aspects, the techniques described herein relate to a connector assembly, further including a location feature disposed on a third outer surface of the connector sleeve separate from the first and second outer surfaces, the location feature configured to secure the connector assembly in a predetermined location and alignment on a substrate.

In some aspects, the techniques described herein relate to a connector assembly, wherein the location feature includes a pair of parallel grooves extending parallel to the second axis. The pair of parallel grooves are configured to receive a pair of parallel rails disposed on the substrate, wherein the second grooves extend from the first and second outer surfaces to the pair of parallel grooves and are configured to engage latches on the parallel rails.

In some aspects, the techniques described herein relate to a connector assembly, wherein the connector sleeve is attached to the connector body by a mounting clip defined in the connector body which is compliant with USCAR Specification EWCAP-005 Rev. G.

In some aspects, the techniques described herein relate to a connector assembly, wherein the connector sleeve provides a tapered lead-in to the connector body.

In some aspects, the techniques described herein relate to a robotic manipulator, including: a pair of gripping arms, each arm including: a first ridge defined on an inner surface extending parallel to a first axis of the pair of gripping arms; and a second ridge defined on the inner surface extending parallel to a second axis of the pair of gripping arms, the second axis being arranged askew to the first axis.

The robotic manipulator of the preceding paragraph can optionally include, additionally and/or alternatively any, one or more of the following features/steps, configurations and/or additional components.

In some aspects, the techniques described herein relate to a robotic manipulator, further including: a plurality of the first ridges defined on the inner surface, wherein at least one first ridge in the plurality of the first ridges is shorter than other first ridges.

In some aspects, the techniques described herein relate to a robotic manipulator, wherein the first axis is substantially perpendicular to the second axis.

In some aspects, the techniques described herein relate to a device configured to secure a connector to a substrate, the connector having a pair of parallel grooves having slots within walls thereof, the device including: a pair of cantilevered rails extending sustainably parallel to one another and configured to be received within the pair of parallel grooves; and latches disposed proximate free ends of the rails, the latches being configured engage edges formed by an intersection of the second slots and the pair of parallel grooves.

The device of the preceding paragraph can optionally include, additionally and/or alternatively any, one or more of the following features/steps, configurations and/or additional components.

In some aspects, the techniques described herein relate to a device, wherein the latches are configured to be disengaged from the slots by a robotic manipulator inserted in the slots such that ridges on the robotic manipulator extend through the slots from outer surfaces of the connector to the latches.

In some aspects, the techniques described herein relate to a device, further including a substrate to which the pair of cantilevered rails is attached.

While an exemplary embodiment(s) has been described, it will be understood by those skilled in the art that various changes may be made, and equivalents may be substituted for elements thereof without departing from the scope of the claims. In addition, many modifications may be made to adapt a particular situation or material to the teachings of this disclosure without departing from the essential scope thereof. Therefore, it is intended that the claims are not limited to the disclosed embodiment(s) but include all embodiments falling within the scope of the following claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

### CLAUSES:

Clause 1. A connector assembly, comprising: a first slot defined in a first outer surface of the connector assembly and another first slot defined in a second outer surface of the connector assembly, the first slots extending parallel to a first axis of the connector assembly, the second outer surface being distinct from and arranged opposite to the first outer surface; and a second slot defined in the first outer surface and another second slot defined in the second outer surface, the second slots extending parallel to a second axis of the connector assembly, the second axis being arranged askew to the first axis, each of the first and second slots being configured to receive one of a plurality of corresponding ridges protruding from a robotic manipulator to positively align and position the connector assembly relative to the robotic manipulator.
Clause 2. The connector assembly in accordance with clause 1, further comprising: a plurality of slots defined in the first outer surface and the second outer surface, wherein the first slot is included as one of the plurality of slots and wherein at least one of the plurality of slots is shorter than other slots in the plurality of slots.
Clause 3. The connector assembly in accordance with clause 1 or 2, wherein the first axis is substantially perpendicular to the second axis.
Clause 4. The connector assembly in accordance with any one of the preceding clauses, further comprising a location feature disposed on a third outer surface of the connector assembly different from the first and second outer surfaces, the location feature configured to secure the connector assembly in a predetermined location and alignment on a substrate.
Clause 5. The connector assembly in accordance with clause 4, wherein the location feature comprises an alignment feature configured to maintain the connector assembly in the predetermined alignment on the substrate and a retention feature configured to secure the connector assembly in the predetermined location on the substrate.
Clause 6. The connector assembly in accordance with clause 5, wherein the alignment feature comprises a pair of parallel grooves extending parallel to the second axis, said pair of parallel grooves configured to receive a pair of parallel rails disposed on the substrate.
Clause 7. The connector assembly in accordance with clause 6, further comprising the substrate, wherein the retention feature comprises the second slots which extend from the first or second outer surfaces to the pair of parallel grooves and wherein the pair of parallel rails are resilient cantilevered beams having a latch proximate a free end and wherein the latches are configured engage edges formed by an intersection of the second slots and the pair of parallel grooves.
Clause 8. The connector assembly in accordance with clause 6 or 7, further comprising the substrate, wherein the retention feature comprises a post protruding from the third outer surface received in a niche in the substrate and wherein the substrate comprises detent features extending into the niche and releasably retaining the post in the niche.
Clause 9. The connector assembly in accordance with clause 8, wherein the retention feature is attached to the connector assembly by a mounting clip which is compliant with USCAR Specification EWCAP-005 Rev. G.
Clause 10. The connector assembly in accordance with any one of the preceding clauses, further comprising a connector body and a separate connector sleeve in which the connector body is disposed, wherein the connector sleeve defines the first and second slots.
Clause 11. The connector assembly in accordance with clause 10, further comprising a location feature disposed on a third outer surface of the connector sleeve separate from the first and second outer surfaces, the location feature configured to secure the connector assembly in a predetermined location and alignment on a substrate.
Clause 12. The connector assembly in accordance with clause 11, wherein the location feature comprises a pair of parallel grooves extending parallel to the second axis, said pair of parallel grooves configured to receive a pair of parallel rails disposed on the substrate, wherein the second grooves extend from the first and second outer surfaces to the pair of parallel grooves and are configured to engage latches on the parallel rails.
Clause 13. The connector assembly in accordance with any one of clauses 10 to 12, wherein the connector sleeve is attached to the connector body by a mounting clip defined in the connector body which is compliant with USCAR Specification EWCAP-005 Rev. G.
Clause 14. The connector assembly in accordance with any one of clauses 10 to 13, wherein the connector sleeve provides a tapered lead-in to the connector body.
Clause 15. A robotic manipulator, comprising: a pair of gripping arms, each arm comprising: a first ridge defined on an inner surface extending parallel to a first axis of the pair of gripping arms; and a second ridge defined on the inner surface extending parallel to a second axis of the pair of gripping arms, the second axis being arranged askew to the first axis.
Clause 16. The robotic manipulator in accordance with clause 15, further comprising: a plurality of the first ridges defined on the inner surface, wherein at least one first ridge in the plurality of the first ridges is shorter than other first ridges.
Clause 17. The robotic manipulator in accordance with clause 15 or 16, wherein the first axis is substantially perpendicular to the second axis.
Clause 18. A device configured to secure a connector to a substrate, the connector having a pair of parallel grooves having slots within walls thereof, the device comprising: a pair of cantilevered rails extending sustainably parallel to one another and configured to be received within the pair of parallel grooves; and latches disposed proximate free ends of the rails and configured to releasably engage the slots.
Clause 19. The device in accordance with clause 18, wherein the latches are configured to be disengaged from the slots by a robotic manipulator inserted in the slots such that ridges on the robotic manipulator extend through the slots from outer surfaces of the connector to the latches.
Clause 20. The device in accordance with clause 18 or 19, further comprising a substrate to which the pair of cantilevered rails is attached.

## Claims

1. A connector assembly (100, 600, 1000), comprising:
a first slot (204, 606, 1006) defined in a first outer surface of the connector assembly (100, 600, 1000) and another first slot (204, 606, 1006) defined in a second outer surface of the connector assembly (100, 600, 1000), the first slot (204, 606, 1006) extending parallel to a first axis (Y) of the connector assembly (100, 600, 1000), the second outer surface being distinct from and arranged opposite to the first outer surface; and
a second slot (206, 608, 1008) defined in the first outer surface and another second slot defined in the second outer surface, the second slot (206, 608, 1008) extending parallel to a second axis (X) of the connector assembly (100, 600, 1000), the second axis (X) being arranged askew to the first axis (Y), each of the first and second slots (204, 606, 1006, 206, 608, 1008) being configured to receive one of a plurality of corresponding ridges (302) protruding from a robotic manipulator (202) to positively align and position the connector assembly (100, 600, 1000) relative to the robotic manipulator (202).

2. The connector assembly (100) in accordance with claim 1, further comprising:
a plurality of slots (204) defined in the first outer surface and the second outer surface, wherein the first slot (204) is included as one of the plurality of slots (204) and wherein at least one of the plurality of slots (204) is shorter than other slots (204) in the plurality of slots (204).

3. The connector assembly (100, 600, 1000) in accordance with claim 1 or 2, wherein the first axis (Y) is substantially perpendicular to the second axis (X).

4. The connector assembly (100) in accordance with any one of the preceding claims, further comprising a location feature (112) disposed on a third outer surface of the connector assembly (100) different from the first and second outer surfaces, the location feature configured to secure the connector assembly (100, 600, 1000) in a predetermined location and alignment on a substrate (108).

5. The connector assembly (100) in accordance with claim 4, wherein the location feature comprises an alignment feature (118) configured to maintain the connector assembly (100) in the predetermined alignment on the substrate (108, 704) and a retention feature (610) configured to secure the connector assembly (100, 600, 1000) in the predetermined location on the substrate (108, 704).

6. The connector assembly (100, 600, 1000) in accordance with claim 5, wherein the alignment feature (118) comprises a pair of parallel grooves (118) extending parallel to the second axis (X), said pair of parallel grooves (118) configured to receive a pair of parallel rails (116) disposed on the substrate (108).

7. The connector assembly (600) in accordance with any one of the preceding claims, further comprising the substrate (704), wherein the retention feature (610) comprises the second slots (608) which extend from the first or second outer surfaces to the pair of parallel grooves (708) and wherein the pair of parallel rails (706) are resilient cantilevered beams having a latch (710) proximate a free end and wherein the latches (710) are configured engage edges formed by an intersection of the second slots (608) and the pair of parallel grooves (708).

8. The connector assembly (100) in accordance with any one of the preceding claims, further comprising the substrate (108), wherein the retention feature comprises a post (112) protruding from the third outer surface received in a niche (110) in the substrate (108) and wherein the substrate (108) comprises detent features extending into the niche (110) and releasably retaining the post (112) in the niche.

9. The connector assembly (600, 1000) in accordance with any one of the preceding claims, further comprising a connector body (602, 1002) and a separate connector sleeve (604,
1004) in which the connector body (602, 1002) is disposed, wherein the connector (600, 1000) sleeve (604, 1004) defines the first and second slots (608, 1008).

10. The connector assembly (600, 1000) in accordance with claim 9, further comprising a location feature (610) disposed on a third outer surface of the connector sleeve (604, 1004) separate from the first and second outer surfaces, the location feature (610) configured to secure the connector assembly (600, 1000) in a predetermined location and alignment on a substrate (704).

11. The connector assembly (600, 1000) in accordance with claim 10, wherein the location feature (610, 1004) comprises a pair of parallel grooves (708, 1010) extending parallel to the second axis (X), said pair of parallel grooves (118) configured to receive a pair of parallel rails (706) disposed on the substrate (704), wherein the second slots (608, 1008) extend from the first and second outer surfaces to the pair of parallel grooves (708, 1010) and are configured to engage latches (710) on the parallel rails (706).

12. The connector assembly (600, 1000) in accordance with any one of claims 9 to 11, wherein the connector sleeve (604, 1004) provides a tapered lead-in to the connector body (602, 1002).

13. A robotic manipulator, comprising:
a pair of gripping arms (202, 706), each arm comprising:
a first ridge (302) defined on an inner surface (304) extending parallel to a first axis of the pair of gripping arms (202, 706); and
a second ridge (306) defined on the inner surface (304) extending parallel to a second axis of the pair of gripping arms (202, 706), the second axis being arranged askew to the first axis.

14. A device (702) configured to secure a connector (600, 1000) to a substrate (704), the connector (600, 1000) having a pair of parallel grooves (708, 1010) having slots (608, 1008) within walls thereof, the device comprising:
a pair of cantilevered rails (706) extending sustainably parallel to one another and configured to be received within the pair of parallel grooves (708, 1010); and
latches (710) disposed proximate free ends of the rails (706) and configured to releasably engage the slots (608, 1008).

15. The device (702) in accordance with claim 14, wherein the latches are configured to be disengaged from the slots (608, 1008) by a robotic manipulator (202), inserted in the slots (608, 1008) such that ridges (306) on the robotic manipulator (202) extend through the slots (608, 1008) from outer surfaces of the connector (600, 1000) to the latches (710).
